# EUROPÄISCHE PATENTSCHRIFT

(11) **EP 1 583 680 B1**
(45) Veröffentlichungstag und Bekanntmachung des Hinweises auf die Patenterteilung: **12.07.2006**
(21) Anmeldenummer: 03795764.4
(22) Anmeldetag: 18.12.2003
(51) Int. Cl.: B62D 1/181

(54) **LENKSÄULE FÜR EIN KRAFTFAHRZEUG**
STEERING COLUMN FOR A MOTOR VEHICLE
COLONNE DE DIRECTION POUR VEHICULE AUTOMOBILE

(30) Priorität: 14.01.2003 DE 10301142
(43) Veröffentlichungstag der Anmeldung: 12.10.2005
(73) Patentinhaber: ZF Lenksysteme Nacam GmbH, 28259 Bremen (DE)
(72) Erfinder: SCHÄFER, Burkhard, 27777 Ganderkesee (DE); LINDHORST, Sabine, 28832 Achim (DE)
(86) Internationale Anmeldenummer: PCT/DE2003/004183
(87) Internationale Veröffentlichungsnummer: WO 2004/067356

(56) Entgegenhaltungen:
- DE-A- 4 217 664
- DE-A- 19 641 152

## Beschreibung

Die vorliegende Erfindung bezieht sich auf eine elektrisch verstellbare Lenksäule, wie sie in Kraftfahrzeugen eingesetzt wird. Die Erfindung betrifft insbesondere eine Lenksäule, die mindestens zwei auf einer Verstellspindel angeordnete, in Axialrichtung der Verstellspindel bewegliche Verstelleinheiten aufweist.

Im Fahrzeugbau werden Kraftfahrzeug-Lenksäuleneinheiten in Personenkraftwagen und Lastkraftwagen eingebaut. Der prinzipielle Aufbau derartiger Einheiten ist dadurch gekennzeichnet, dass für jede Verstellrichtung (Längsverstellung und Neigungsverstellung) ein teleskopierbarer beziehungsweise ein kippbarer Abschnitt vorliegt, wobei ein jeder über eine Kupplung vom Anwender aktiviert und somit eine Verstellung in die jeweilige Richtung vorgenommen werden kann.

Eine solche Lenksäuleneinheit ist in dem Patent DE 196 41 152 C2 offenbart und hier in den Figuren 4 und 5 dargestellt. Es besteht aus einem Lenksäulengehäuse 14, einer darin angeordneten Lenksäule 15 und einer elektrisch angetriebenen Verstellvorrichtung zur Längsverstellung und zur Neigungsverstellung der Lenksäule 15. Dabei umfasst die Verstellvorrichtung einen Elektromotor 17, der eine einteilige Verstell-Spindel 18 dreht, sowie mindestens zwei auf der Verstell-Spindel 18 angeordnete, in Axialrichtung der Verstell-Spindel 18 beweglich gelagerte Spindel-Muttem 19 in einem jeweiligen Lagergehäuse 16. Zur Längsbewegung und zur Neigungsbewegung ist je ein Verstellmechanismus (Verbindungshebel 20, Kipphebel 21) vorgesehen sowie je eine Schaltvorrichtung 22 (Hubmagnet), wobei zwischen der jeweiligen Schaltvorrichtung 22 und der mit der Schaltvorrichtung 22 korrespondierenden Spindel-Mutter 24 während der Verstellung durch den Anwender eine zeitweilige feste mechanische Verbindung hergestellt wird. Die jeweilige Spindelmutter 19 bildet mit dem jeweiligen Lagergehäuse 16 und der jeweiligen Schaltvorrichtung 22 eine sogenannte Verstelleinheit. Eine Verstelleinheit, die eine Schaltvorrichtung 22 (zum Beispiel einen Hubmagneten) aufweist, wird im weiteren Verlauf der Beschreibung als Kupplung bezeichnet.

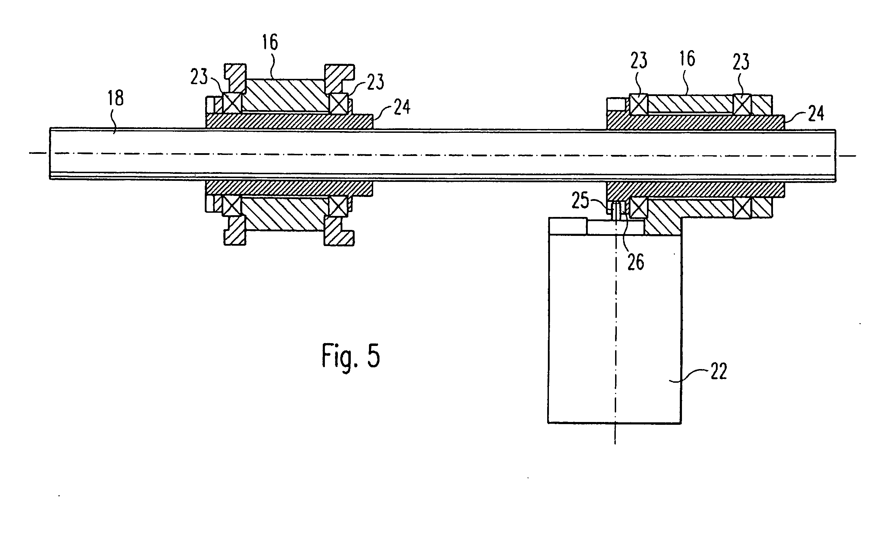

Anhand Figur 5 wird die Funktionsweise des Verstellmechanismus näher erläutert. Im axialen Schnitt ist die Verstell-Spindel 18 dargestellt, die an einem ihrer Enden durch einen Elektromotor (in Figur 5 nicht dargestellt) angetrieben wird. In definiertem Abstand zueinander befinden sich zwei Axiallager 23, die jeweils eine Spindelmutter 24 lagern. Das Innengewinde einer Spindelmutter 24 korrespondiert mit dem Außengewinde der Verstell-Spindel 18. Das Reibmoment zwischen Verstell-Spindel 18 und Spindelmutter 24 ist größer als das Reibmoment zwischen Spindelmutter 24 und Axiallager 23, so dass eine Drehbewegung der Verstell-Spindel 18 eine gleichgerichtete Drehbewegung der beiden Spindelmuttern 24 bewirkt, ohne dass eine Lageänderung der Axiallager 23 mit den enthaltenen Spindelmuttern 24 in axialer Längsrichtung stattfindet. Die rechte Verstelleinheit ist nun mit einer Schaltvorrichtung 22 versehen, welche in diesem Ausführungsbeispiel einen Hubmagneten darstellt. Dieser Hubmagnet 22 weist einen Stift 25 auf, der aus dem Hubmagnetgehäuse bei Ansteuerung des Hubmagneten 22 in Richtung Mittelachse der Verstell-Spindel 18 ausfahrbar ist und in eine Aussparung 26 der Spindelmutter 24 eingreift. Dadurch wird durch die Schaltvorrichtung 22 (Hubmagnet) zwischen dem Axiallager 23 und der Spindelmutter 24 eine feste mechanische Verbindung erzeugt, so dass die Rotationsbewegung der Spindelmutter 24 blockiert wird und die Drehung der Verstell-Spindel 18 zwangsläufig zu einer Axialverschiebung der Spindelmutter 24 führt. Diese Axialverschiebung wird durch eine geeignete Mechanik (mittels Verbindungshebel 20 beziehungsweise Kipphebel 21) in eine Axialverschiebung beziehungsweise Kippung des Lenksäulengehäuses 14 umgesetzt.

Bei einer Lenksäule gemäß der oben beschriebenen Bauart beziehungsweise mit den oben genannten Eigenschaften ist eine Verstellrichtungsauswahl über die Ansteuerung der entsprechenden Verstelleinheit beziehungsweise Kupplung möglich.

Aufgabe der vorliegenden Erfindung ist es, eine einmotorige elektrisch verstellbare Lenksäule gemäß dem Oberbegriff des Anspruches 1 bereitzustellen, die erheblich weniger insbesondere elektrische Bauteile aufweist und somit einerseits platzsparender, andererseits weniger störanfällig und kostengünstiger ist.

Die oben genannte Aufgabe wird durch eine Kraftfahrzeug-Lenksäule gemäß den Merkmalen des Anspruchs 1 gelöst. Die abhängigen Ansprüche bilden den zentralen Gedanken der Erfindung in besonders vorteilhafter Weise weiter.

Beansprucht wird gemäß der vorliegenden Erfindung eine Lenksäule für ein Kraftfahrzeug mit
- einer Montageplatte
- einem Mantelrohr mit Lenkradanschluß,
- einer elektrisch angetriebenen Verstellvorrichtung zur Längsverstellung und Neigungsverstellung der Lenksäule, wobei die Verstellvorrichtung umfasst:

- eine elektrische Antriebseinheit zum Drehantrieb einer einteiligen Verstell-Spindel
- zwei auf der Verstell-Spindel angeordnete, in Axialrichtung der Verstell-Spindel bewegliche Verstelleinheiten,
wobei die erste Verstelleinheit über einen Schwenkhebel mit der Montageplatte derart schwenkbar verbunden ist, dass eine mechanische Übertragung der Axialbewegung der Verstelleinheit in eine Neigungsbewegung des Mantelrohres erfolgt,
und die zweite Verstelleinheit über ein Befestigungselement mit der Montageplatte derart verbunden ist, dass eine mechanische Übertragung der Axialbewegung der zweiten Verstelleinheit in eine Längsbewegung des Mantelrohres erfolgt, wobei erfindungsgemäß eine der beiden Verstelleinheiten in ständiger Wirkverbindung mit der Verstellspindel steht und bei Drehen der Verstellspindel in Axialrichtung bewegt wird und die andere der beiden Verstelleinheiten nur durch Aktivierung einer Schaltvorrichtung in Wirkverbindung mit der Verstellspindel gebracht werden kann.

Vorteilhafterweise ist die immer in Wirkverbindung mit der Verstellspindel stehende Verstelleinheit eine einfache Spindelverstellmutter.

Dagegen besteht die nur durch Aktivierung einer Schaltvorrichtung in Wirkverbindung mit der Verstellspindel zu bringende Verstelleinheit aus einem Gehäuse, in dem eine Spindelmutter drehbar gelagert ist, die nur durch Aktivieren der Schaltvorrichtung am Mitrotieren mit der Verstellspindel gehindert wird.

In unterschiedlichen vorteilhaften Ausgestaltungen der Erfindung ist die Schaltvorrichtung ein Hubmagnet, eine Magnetreibungsbremse, eine Wirbelstrombremse oder eine Hysteresebremse.

Die erfindungsgemäße Bauart der Lenksäule erlaubt eine platzsparende Anbringung der Verstellspindel mit den Verstelleinheiten und der elektrischen Antriebseinheit unterhalb des Mantelrohres. Somit ist rechts und links der Lenksäule genügend Platz für Airbags beziehungsweise Crash-Polster.

Um eine unmittelbare Bewegungsübertragung zwischen Mantelrohr und der an der Karosserie befestigten Montageplatte zu ermöglichen, ist das Befestigungselement mit der Montageplatte starr verbunden.

Dabei weist das Befestigungselement ein Langloch auf, in dem die zweite Verstelleinheit derart geführt ist, dass diese und damit auch das Mantelrohr senkrecht relativ zur Montageplatte bewegt werden kann.

Die Montageplatte weist vorteilhafterweise einen Flansch mit einem Drehbolzen auf, der in einem Flansch des Mantelrohres drehbar gelagert ist.

Der Flansch des Mantelrohres hingegen weist ein Langloch auf, in dem der Drehbolzen so geführt ist, dass Montageplatte und Mantelrohr parallel zueinander verschoben werden können.

Auch der Schwenkhebel ist Karosserie-seitig über einen Drehbolzen in dem Flansch der Montageplatte und Mantelrohr-seitig über einen Drehbolzen der ersten Verstelleinheit drehbar gelagert.

Weitere Merkmale, Eigenschaften und Vorteile der vorliegenden Erfindung werden nunmehr anhand von Ausführungsbeispielen und unter Bezugnahme auf die begleitenden Figuren der Zeichnungen erläutert.
- Figur 1: zeigt in einer vereinfachten teilgeschnittenen Seitenansicht eine einmotorige Lenksäule, die erfindungsgemäß mit nur einer Kupplung teleskopisch oder höhenverstellbar bewegt werden kann,
- Figur 2: zeigt die erfindungsgemäße Lenksäule aus einer ersten perspektivischen Seitenansicht,
- Figur 3: zeigt die erfindungsgemäße Lenksäule aus einer zweiten perspektivischen Seitenansicht,
- Figur 4: zeigt eine perspektivische Darstellung einer verstellbaren Kraftfahrzeug-Lenksäule nach dem Stand der Technik in nichteingebautem Zustand,
- Figur 5: zeigt einen axialen Schnitt durch die Verstellspindel der in Figur 4 dargestellten Kraftfahrzeug-Lenksäule mit der zu der jeweiligen Kupplung gehörenden Verstelleinheit.

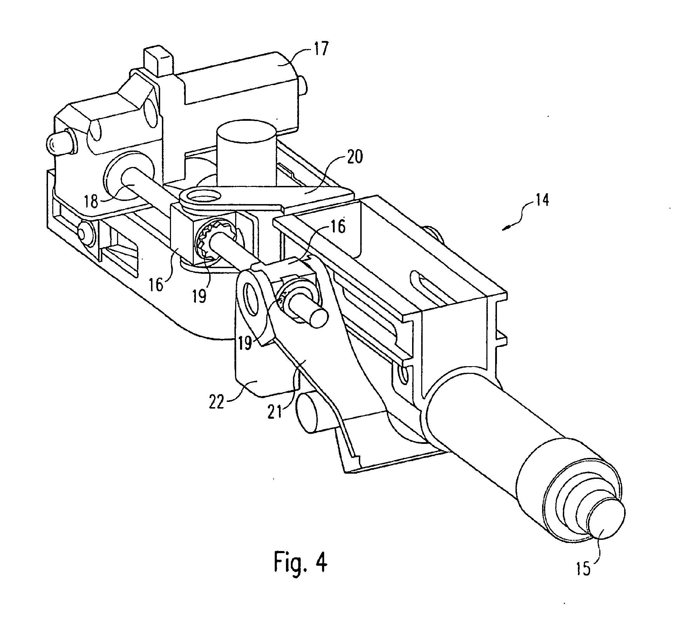

Der Stand der Technik wurde bereits weiter oben anhand der Figuren 4 und 5 ausführlich dargestellt und erläutert.

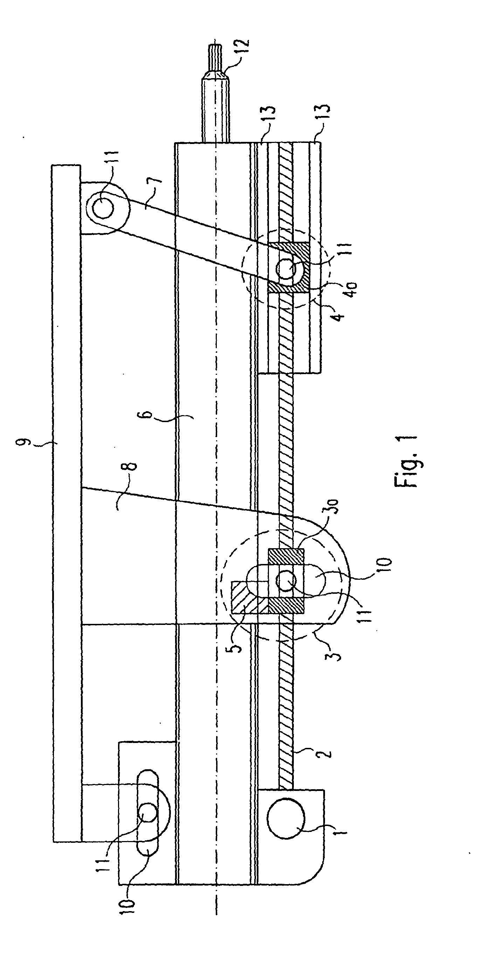

Figur 1 zeigt in einer teilgeschnittenen Seitenansicht eine einmotorische elektrisch verstellbare Lenksäule, welche erfindungsgemäß nur eine Kupplung 3 aufweist. Der Lenkradanschluss 12 ist mit einem Mantelrohr 6 verbunden, welches relativ zu einer an der Karosserie fixierten Montageplatte 9 axial verschoben oder aber in einer Ebene - vorzugsweise vertikal - geschwenkt werden kann.

Das Mantelrohr ist über drei Elemente mit der Montageplatte in jeweils unterschiedlicher Weise verbunden:

Das erste Element ist ein Drehbolzen 11, der mit einem Flansch der Montageplatte 9 fest verbunden ist und in einem Langloch 10 eines mit dem Mantelrohr 9 verbundenen Flansches derart geführt ist, dass das Mantelrohr einerseits parallel zu seiner eigenen Achse verschiebbar, andererseits um diesen Drehbolzen 11 geschwenkt werden kann.

Das zweite Element ist ein Schwenkhebel 7, der montageplattenseitig um einen Drehbolzen 11, oder auch eine Niet- oder Steck-Verbindung, drehbar gelagert ist. Die andere Seite des Schwenkhebels 7 ist ebenfalls drehbar (über einen Drehbolzen 11) mit einer Spindelverstellmutter 4a verbunden. Die Spindelverstellmutter 4a ist in einer Kulissenführung 13 geführt, das heißt, sie stellt einen Gleitschuh dar, der in einer am Mantelrohr befindlichen Kontur 13 linear beziehungsweise parallel zum Mantelrohr 6 geführt wird.

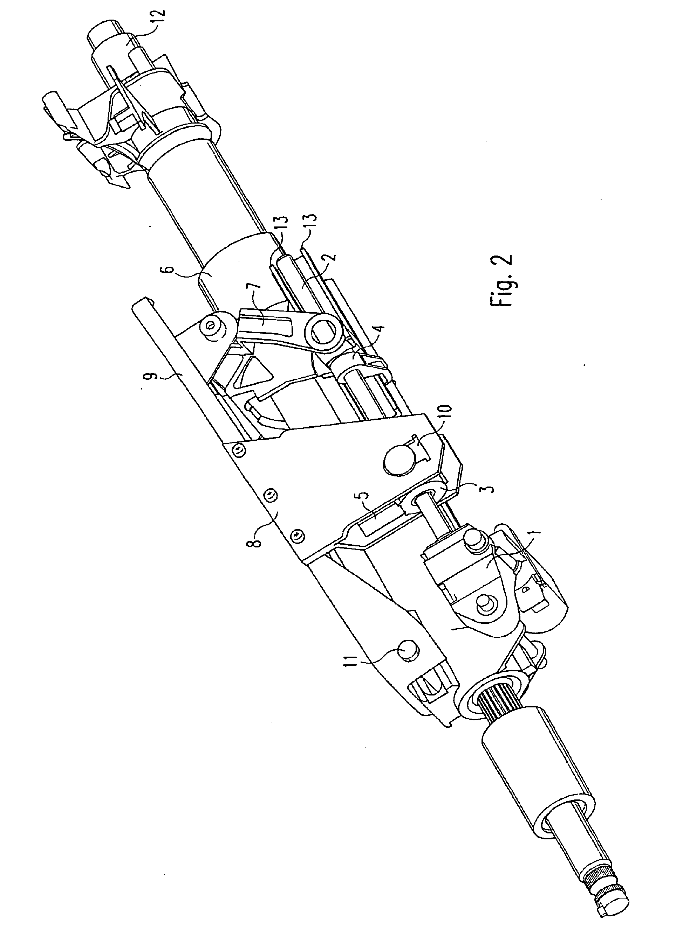

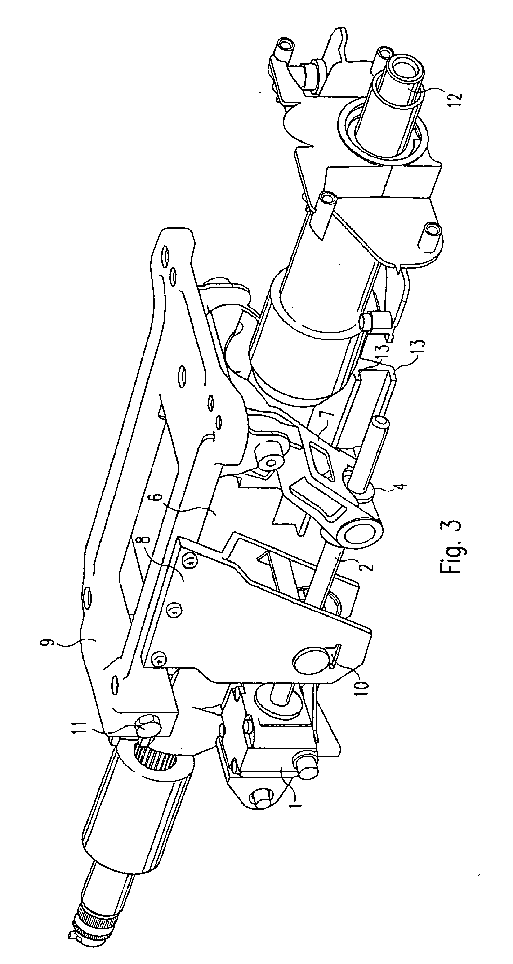

Das dritte Element ist ein sogenanntes Befestigungselement 8 das einen stabilen Flansch darstellt, welcher montageplattenseitig mit der Montageplatte 9 verschraubt (Figuren 2 und 3) und mantelrohrseitig in einem vertikalen Langloch 10 mit einem Bolzen 11 geführt ist. Diese Verbindung erlaubt eine Vertikalbewegung des Mantelrohres 6 relativ zur Montageplatte 9. Der Bolzen ist mit einer Kupplung 3 fest verbunden.

Sowohl die Spindelverstellmutter 4a als auch die Kupplung 3 sind in einem definierten Abstand zueinander auf eine Verstellspindel 2 aufgeschraubt, die parallel zur Achse des Mantelrohres 6 verläuft und mit einem am Mantelrohr 6 befestigten Elektromotor 1 in Rotation versetzt werden kann. Die Rotationsrichtung der Verstellspindel 2 wird über die Drehrichtung des Motors 1 festgelegt.

Die Spindelverstellmutter 4a ist so konstruiert, dass eine Drehung der Verstellspindel 2 einen axialen Versatz der Spindelverstellmutter 4a zur Folge hat.

Die Richtung des Versatzes hängt von der Rotationsrichtung der Verstellspindel 2 ab.

Die Kupplung 3 entspricht in ihrem Aufbau dem der beiden Verstelleinheiten im Stand der Technik (Figur 5). Im Inneren der Kupplung 3 befindet sich eine Mutter, die normalerweise mit der Verstellspindel 2 mitrotiert. Durch Aktivieren der Schaltvorrichtung 5 kann durch Kraft- oder Formschluss die Drehung der in einem Gehäuse befindlichen Spindelmutter 3a gestoppt werden, was dazu führt, dass die gesamte Kupplung 3 wie die Spindelverstellmutter 4a einen (gleichen) axialen Versatz erfährt. Die Schaltvorrichtung kann ein Hubmagnet, eine Magnetreibungsbremse, eine Wirbelstrombremse oder eine Hysteresebremse sein.

Dieser Mechanismus kann im Sinne einer elektrischen Verstellung der Lenksäule wie folgt genutzt werden:

Der Motor 1 wird durch den Anwender beziehungsweise den Fahrzeugführer in Drehung versetzt. Die Drehrichtung ist wählbar. Ist die Schaltvorrichtung 5 der Kupplung 3 nicht aktiviert, erfährt nur die Spindelverstellmutter 4a einen axialen Versatz in der Kulissenführung 13, was über den Schwenkhebel 7 zu einer Schwenkbewegung des Mantelrohres 6 relativ zur Montageplatte 9 und damit zu einer Auf- beziehungsweise Abbewegung des Lenkrades führt.

Ist die Schaltvorrichtung 5 aktiviert (eingekuppelter Zustand, erfahren bei Drehung des Motors 1 sowohl Spindelverstellmutter 4a als auch die Kupplung 3 einen axialen Versatz, wobei nur eine Abstandsveränderung relativ zum Motor 1 erfolgt und Spindelverstellmutter 4a und Kupplung 3 ihren relativen Abstand zueinander halten. Eine Aktivierung der Kupplung 3 bewirkt damit keine Schwenkbewegung (keine Höhenverstellung), sondern ein teleskopisches Ein- oder Ausfahren des Lenkrades, je nach Drehrichtung des Motors.

Ein wichtiger Unterschied der vorliegenden Erfindung zu einer elektrischen Lenksäulenverstellung nach dem Stand der Technik ist die Tatsache, dass in der erfindungsgemäßen Ausführung nicht beide Verstellungen (Höhenbeziehungsweise Axialverstellung) gleichzeitig (mit der Einschränkung derselben Motordrehrichtung) vorgenommen werden können. Durch Aktivierung oder Deaktivierung der Kupplung 3 können beide Verstellungen nur wechselseitig gefahren werden. Dies ist jedoch kein wirklicher Nachteil, da die Ergonomie und Haptik des Menschen ohnehin einer einparametrischen Denkweise entspricht.

Die auf nur eine Kupplung 3 reduzierte einmotorige elektrisch verstellbare Lenksäule stellt somit eine Optimierung dar, die sich in erster Linie nicht für den Anwender zeigt, wohl aber für den Hersteller:

So ist bei nur einer Kupplung 3 (mit elektrischer Schaltvorrichtung 5) insgesamt ein geringerer Steuerungsaufwand innerhalb der Bordelektronik notwendig. Es sind weniger elektrische Schnittstellen (zum Beispiel Stecker) erforderlich. Der Entfall einer Kupplung 3 und damit auch deren Montage bewirkt eine deutliche Kostenreduzierung. Es werden weniger Teile benötig, weshalb die gesamte Lenksäule kompakter und damit gewichtsreduzierter gebaut werden kann. Beispielsweise entfällt eine Kugelführung beziehungsweise ein Axialgehäuse durch eine Integration des Lenkradschaftes im Mantelrohr. Die gesamte Lenksäule kann schmaler beziehungsweise schlanker gestaltet werden, weshalb rechts und links der Lenksäule - also im Falle eines Auffahrunfalls (engl.: Crash) im Knieaufschlagsbereich - Schutzkissen oder andere weiche Materialien montiert werden können, um ein besseres Crash-Verhalten zu bewirken.

### Bezugszeichenliste

- 1: Motor
- 2: Verstellspindel
- 3: zweite Verstelleinheit beziehungsweise Kupplung
- 3a: Spindelmutter in Gehäuse
- 4: erste Verstelleinheit
- 4a: Spindelverstellmutter
- 5: Schaltvorrichtung (Magnet)
- 6: Mantelrohr
- 7: Schwenkhebel
- 8: Befestigungselement
- 9: Montageplatte
- 10: Langloch
- 11: Drehbolzen
- 12: Lenkradanschluss
- 13: Kulissenführung
- 14: Lenksäulengehäuse
- 15: Lenksäule
- 16: axiales Lagergehäuse
- 17: Elektromotor
- 18: Verstell-Spindel
- 19: Spindelmutter
- 20: Verbindungshebel
- 21: Kipphebel
- 22: Schaltvorrichtung (Hubmagnet)
- 23: Axiallager
- 24: Spindelmutter
- 25: Stift
- 26: Aussparung in der Spindelmutter

## Patentansprüche

1. Lenksäule für ein Kraftfahrzeug mit
- einer Montageplatte (9)
- einem Mantelrohr (6) mit Lenkradanschluß (12),
- einer elektrisch angetriebenen Verstellvorrichtung zur Längsverstellung und Neigungsverstellung der Lenksäule, wobei die Verstellvorrichtung umfasst:
- eine elektrische Antriebseinheit (1) zum Drehantrieb einer einteiligen Verstell-Spindel (2)
- zwei auf der Verstell-Spindel (2) angeordnete, in Axialrichtung der Verstell-Spindel (2) bewegliche Verstelleinheiten (3 beziehungsweise 4),
wobei die erste Verstelleinheit (4) über einen Schwenkhebel (7) mit der Montageplatte derart schwenkbar verbunden ist, dass eine mechanische Übertragung der Axialbewegung der Verstelleinheit (4) in eine Neigungsbewegung des Mantelrohres (6) erfolgt, und die zweite Verstelleinheit (3) über ein Befestigungselement (8) mit der Montageplatte derart verbunden ist, dass eine mechanische Übertragung der Axialbewegung der zweiten Verstelleinheit (3) in eine Längsbewegung des Mantelrohres (6) erfolgt, **dadurch gekennzeichnet, dass** eine der beiden Verstelleinheiten (3 beziehungsweise 4) in ständiger Wirkverbindung mit der Verstellspindel (2) steht und bei Drehen der Verstellspindel (2) in Axialrichtung bewegt wird und die andere der beiden Verstelleinheiten (4 beziehungsweise 3) nur durch Aktivierung einer Schaltvorrichtung (5) in Wirkverbindung mit der Verstellspindel (2) gebracht werden kann.

2. Kraftfahrzeuglenksäuleneinheit nach Anspruch 1,
**dadurch gekennzeichnet,**
**dass** die in ständiger Wirkverbindung mit der Verstellspindel (2) stehende Verstelleinheit (3 beziehungsweise 4) eine Spindelverstellmutter ist.

3. Kraftfahrzeuglenksäuleneinheit nach einem der Ansprüche 1 bis 2,
**dadurch gekennzeichnet,**
**dass** die nur durch Aktivierung einer Schaltvorrichtung (5) in Wirkverbindung mit der Verstellspindel (2) zu bringende Verstelleinheit (4 beziehungsweise 3) aus einem Gehäuse besteht, in dem eine Spindelmutter (4a) drehbar gelagert, ist die nur durch Aktivieren der Schaltvorrichtung (5) am Mitrotieren mit der Verstellspindel (2) gehindert wird.

4. Kraftfahrzeuglenksäuleneinheit nach einem der Ansprüche 1 bis 3,
**dadurch gekennzeichnet,**
**dass** die Schaltvorrichtung (5) ein Hubmagnet, eine Magnetreibungsbremse, eine Wirbelstrombremse oder eine Hysteresebremse ist.

5. Kraftfahrzeuglenksäuleneinheit nach einem der Ansprüche 1 bis 4,
**dadurch gekennzeichnet,**
**dass** die Verstellspindel (2) mit den Verstelleinheiten (3 beziehungsweise 4) und der elektrischen Antriebseinheit (1) platzsparend unterhalb des Mantelrohres (6) angebracht ist.

6. Kraftfahrzeuglenksäuleneinheit nach einem der Ansprüche 1 bis 5,
**dadurch gekennzeichnet,**
**dass** das Befestigungselement (8) mit der Montageplatte (9) starr verbunden ist.

7. Kraftfahrzeuglenksäuleneinheit nach einem der Ansprüche 1 bis 6,
**dadurch gekennzeichnet,**
**dass** das Befestigungselement (8) ein Langloch aufweist, in dem die zweite Verstelleinheit (3) derart geführt ist, dass diese (3) und damit auch das Mantelrohr (6) senkrecht relativ zur Montageplatte (9) bewegt werden kann.

8. Kraftfahrzeuglenksäuleneinheit nach einem der Ansprüche 1 bis 7,
**dadurch gekennzeichnet,**
**dass** die Montageplatte (9) einen Flansch mit einem Drehbolzen (11) aufweist.

9. Kraftfahrzeuglenksäuleneinheit nach Anspruch 8,
**dadurch gekennzeichnet,**
**dass** der Drehbolzen (11) in einem Flansch des Mantelrohres (6) drehbar gelagert ist.

10. Kraftfahrzeuglenksäuleneinheit nach Anspruch 9,
**dadurch gekennzeichnet,**
**dass** der Flansch des Mantelrohres (6) ein Langloch (10) aufweist, in dem der Drehbolzen (11) so geführt ist, dass Montageplatte (9) und Mantelrohr (6) parallel zueinander verschoben werden können.

11. Kraftfahrzeuglenksäuleneinheit nach einem der Ansprüche 1 bis 10,
**dadurch gekennzeichnet,**
**dass** der Schwenkhebel (7) über einen Drehbolzen (11) in einem Flansch der Montageplatte (9) drehbar gelagert ist.

12. Kraftfahrzeuglenksäuleneinheit nach einem der Ansprüche 1 bis 11,
**dadurch gekennzeichnet,**
**dass** der Schwenkhebel (7) über einen Drehbolzen (11) an der ersten Verstelleinheit (4) drehbar gelagert ist.

## Claims

1. Steering column for a motor vehicle having
- a mounting plate (9)
- an enclosing tube (6) with steering wheel connection (12),
- an electrically driven adjusting device for longitudinal adjustment and adjustment of the angle of the steering column, wherein the adjusting device comprises:
- an electric drive unit (1) for setting a one-part adjusting spindle (2) in rotation
- two adjusting units (3 and/or 4) disposed on the adjusting spindle (2) and movable in axial direction of the adjusting spindle (2),
wherein the first adjusting unit (4) is connected by a pivoted lever (7) to the mounting plate in such a pivotable manner that a mechanical translation of the axial movement of the adjusting unit (4) into an angular movement of the enclosing tube (6) occurs,
and the second adjusting unit (3) is connected by a fastening element (8) to the mounting plate in such a way that a mechanical translation of the axial movement of the second adjusting unit (3) into a longitudinal movement of the enclosing tube (6) occurs, **characterized in that** one of the two adjusting units (3 and/or 4) is in constant working connection with the adjusting spindle (2) and upon rotation of the adjusting spindle (2) is moved in axial direction and the other of the two adjusting units (4 and/or 3) may be brought into working connection with the adjusting spindle (2) only through activation of an operating device (5).

2. Motor vehicle steering column unit according to claim 1,
**characterized in**
**that** the adjusting unit (3 and/or 4) that is in constant working connection with the adjusting spindle (2) is a spindle adjusting nut.

3. Motor vehicle steering column unit according to one of claims 1 to 2,
**characterized in**
**that** the adjusting unit (4 and/or 3) that is to be brought into working connection with the adjusting spindle (2) only through activation of an operating device (5) comprises a housing, in which a spindle nut (4a) is rotatably mounted, which is prevented from corotating with the adjusting spindle (2) only by activating the operating device (5).

4. Motor vehicle steering column unit according to one of claims 1 to 3,
**characterized in**
**that** the operating device (5) is a solenoid, a magnetic friction brake, an eddy-current brake or a hysteresis brake.

5. Motor vehicle steering column unit according to one of claims 1 to 4,
**characterized in**
**that** the adjusting spindle (2) having the adjusting units (3 and/or 4) and the electric drive unit (1) is installed in a space-saving manner underneath the enclosing tube (6).

6. Motor vehicle steering column unit according to one of claims 1 to 5,
**characterized in**
**that** the fastening element (8) is rigidly connected to the mounting plate (9).

7. Motor vehicle steering column unit according to one of claims 1 to 6,
**characterized in**
**that** the fastening element (8) has an oblong hole, in which the second adjusting unit (3) is guided in such a way that the second adjusting unit (3) and hence the enclosing tube (6) may be moved vertically relative to the mounting plate (9).

8. Motor vehicle steering column unit according to one of claims 1 to 7,
**characterized in**
**that** the mounting plate (9) has a flange with a pivot pin (11).

9. Motor vehicle steering column unit according to claim 8,
**characterized in**
**that** the pivot pin (11) is mounted rotatably in a flange of the enclosing tube (6).

10. Motor vehicle steering column unit according to claim 9,
**characterized in**
**that** the flange of the enclosing tube (6) has an oblong hole (10), in which the pivot pin (11) is guided in such a way that mounting plate (9) and enclosing tube (6) may be displaced parallel to one another.

11. Motor vehicle steering column unit according to one of claims 1 to 10,
**characterized in**
**that** the pivoted lever (7) is mounted rotatably by means of a pivot pin (11) in a flange of the mounting plate (9).

12. Motor vehicle steering column unit according to one of claims 1 to 11,
**characterized in**
**that** the pivoted lever (7) is mounted rotatably by means of a pivot pin (11) on the first adjusting unit (4).

## Revendications

1. Colonne de direction pour un véhicule avec
- une plaque de montage (9)
- un tube-corps (6) avec un raccordement au volant (12)
- un dispositif de réglage à entraînement électrique pour le réglage longitudinal et le réglage d'inclinaison de la colonne de direction, le dispositif de réglage comprenant :
- un ensemble d'entraînement électrique (1) pour l'entraînement en rotation d'une broche de réglage d'un seul tenant (2),
- deux ensembles de réglage (3 respectivement 4) disposés sur la broche de réglage (2), mobiles dans la direction axiale de la broche de réglage (2),
le premier ensemble de réglage (4) étant relié à pivotement à la plaque de montage par l'intermédiaire d'un levier pivotant (7), de façon à convertir mécaniquement le mouvement axial de l'ensemble de réglage (4) en un mouvement d'inclinaison du tube-corps (6),
et le second ensemble de réglage (3) étant relié à la plaque de montage par l'intermédiaire -d'un élément de fixation (8), de façon à convertir mécaniquement le mouvement axial du second ensemble de réglage (3) en un mouvement longitudinal du tube-corps (6), **caractérisée en ce que** l'un des deux ensembles de réglage (3 respectivement 4) est en liaison active permanente avec la broche de réglage (2) et est déplacé dans la direction axiale en cas de rotation de la broche de réglage (2) et l'autre des deux ensembles de réglage (4 respectivement 3) ne peut être amené en liaison active avec la broche de réglage (2) que par activation d'un dispositif de commutation (5).

2. Ensemble de colonne de direction de véhicule selon la revendication 1,
**caractérisé en ce que**
l'ensemble de réglage (3 respectivement 4) en liaison active permanente avec la broche de réglage (2) est un écrou de réglage de broche.

3. Ensemble de colonne de direction de véhicule selon une des revendications 1 à 2,
**caractérisé en ce que**
l'ensemble de réglage (4 respectivement 3) à amener en liaison active avec la broche de réglage (2) par activation d'un dispositif de commutation (5) est constitué d'un boîtier dans lequel est monté à rotation un écrou de broche (4a) dont la rotation conjointe avec la broche de réglage (2) n'est empêchée que par activation du dispositif de commutation (5).

4. Ensemble de colonne de direction de véhicule selon une des revendications 1 à 3,
**caractérisé en ce que**
le dispositif de commutation (5) est un aimant de levage, un frein magnétique à friction, un frein à courants de Foucault ou un frein à hystérésis.

5. Ensemble de colonne de direction de véhicule selon une des revendications 1 à 4,
**caractérisé en ce que**
la broche de réglage (2) avec les ensembles de réglage (3 respectivement 4) et l'ensemble d'entraînement électrique (1) est disposée de manière peu encombrante sous le tube-corps (6).

6. Ensemble de colonne de direction de véhicule selon une des revendications 1 à 5,
**caractérisé en ce que**
l'élément de fixation (8) est relié à la plaque de montage (9) de manière rigide.

7. Ensemble de colonne de direction de véhicule selon une des revendications 1 à 6,
**caractérisé en ce que**
l'élément de fixation (8) est pourvu d'un trou oblong dans lequel le second ensemble de réglage (3) est guidé de façon que celui-ci (3) et donc aussi le tube-corps (6) puissent être déplacés perpendiculairement à la plaque de montage (9).

8. Ensemble de colonne de direction de véhicule selon une des revendications 1 à 7,
**caractérisé en ce que**
la plaque de montage (9) comporte une bride avec un axe de rotation (11).

9. Ensemble de colonne de direction de véhicule selon la revendication 8,
**caractérisé en ce que**
l'axe de rotation (11) est monté à pivotement dans une bride du tube-corps (6).

10. Ensemble de colonne de direction de véhicule selon la
revendication 9,
**caractérisé en ce que**
la bride du tube-corps (6) est pourvue d'un trou oblong (10) dans lequel l'axe de rotation (11) est guidé de façon de façon que la plaque de montage (9) et le tube-corps (6) puissent coulisser parallèlement l'un à l'autre.

11. Ensemble de colonne de direction de véhicule selon une des revendications 1 à 10,
**caractérisé en ce que**
le levier pivotant (7) est monté à rotation dans une bride de la plaque de montage (9) par l'intermédiaire d'un axe de rotation (11).

12. Ensemble de colonne de direction de véhicule selon une des revendications 1 à 11,
**caractérisé en ce que**
le levier pivotant (7) est monté à rotation sur le premier ensemble de réglage (4) par l'intermédiaire d'un axe de rotation (11).
